# EUROPÄISCHE PATENTSCHRIFT

(11) **EP 2 846 426 B1**
(45) Veröffentlichungstag und Bekanntmachung des Hinweises auf die Patenterteilung: **18.11.2020**
(21) Anmeldenummer: 14184263.3
(22) Anmeldetag: 10.09.2014
(51) Int. Cl.: H02B 13/025, H02B 13/075, H02B 13/065, H02B 13/035

(54) **Schaltanlage mit Störlichtbogenbegrenzer**
Switching assembly with arc fault protection limiter
Installation de distribution avec limiteur d'arc de lumière parasite

(30) Priorität: 10.09.2013 DE 102013109938
(43) Veröffentlichungstag der Anmeldung: 11.03.2015
(73) Patentinhaber: Fritz Driescher KG Spezialfabrik für Elektrizitätswerksbedarf GmbH & Co., D-41844 Wegberg (DE)
(72) Erfinder: Bernards, Stefan, 41363 Jüchen (DE); Bünger, Stefan, 41812 Erkelenz (DE)
(74) Vertreter: Lenzing Gerber Stute

(56) Entgegenhaltungen:
- EP-A1- 2 169 794
- WO-A1-91/03089
- DE-A1- 3 728 235
- DE-A1- 4 111 586
- DE-A1- 4 302 416
- US-A- 5 892 195
- Driescher - Wegberg: "Montage- und Betriebsanleitung; Mittelspannungs-Lastanlage Typ MINEX / G.I.S.E.L.A. SF6 - Isoliert Bemessungsspannung bis 24 Kv Bemessungsstrom 630 A", , 1 June 2011 (2011-06-01), pages 1-53, XP055257303, Retrieved from the Internet: URL:https://www.yumpu.com/de/document/view /5371747/montage-und-betriebsanleitung-mon tage-driescher-a-wegberg [retrieved on 2016-03-10]

## Beschreibung

Die Erfindung betrifft eine Mittelspannungsschaltanlage mit mindestens einem Kabelanschlussraum und mindestens einem gasisolierten, gekapselten, Schalter und Sammelschienen aufweisenden Schaltfeld, wobei sowohl das Schaltfeld als auch der Kabelanschlussraum mit einem Störlichtbogenbegrenzer zum schnellen Auslösen eines Erdungsschalters bei Auftreten eines Störlichtbogens ausgerüstet sind.

Aus der deutschen Patentanmeldung DE 36 06 770 A1 ist eine Mittelspannungsschaltanlage mit einem Störlichtbogenbegrenzer bekannt. Zur Störlichtbogenbegrenzung weisen gasisolierte gekapselte Schaltfelder der Schaltanlage mindestens einen nachgiebigen Abschnitt oder Wandteil auf, der über ein Gestänge mit Kraftspeicherantrieben von Erdungsschaltern verbunden ist. Die Erdungsschalter dienen gleichzeitig als Kurzschließer. Im Falle eines Störlichtbogens führt die Lichtbogenenergie bzw. der durch den Lichtbogen erzeugte Überdruck zu einer Bewegung des nachgiebigen Wandteils, wodurch das Gestänge betätigt und dadurch die Kraftspeicherantriebe ausgelöst werden, so dass sämtliche Erdungsschalter eingeschaltet werden und so unabhängig vom Ort des Lichtbogens die Energieeinspeisung in jedem Fall sicher kurzgeschlossen wird. Gleichzeitig wird der Aufbau des Lichtbogens unterbrochen, so dass der Druckstoß und die nachfolgend freiwerdende thermische Energie deutlich schwächer sind.

Im Ergebnis wird damit im Störlichtbogenfall vermieden, dass Lichtbogenzersetzungsprodukte aus dem Schaltfeld austreten.

Um bei einer solchen Mittelspannungsschaltanlage zusätzlich die Folgen von Durchschlägen bzw. Erdschlüssen außerhalb des gekapselten Schaltfeldes, insbesondere daraus resultierende Lichtbogenwirkungen minimal zu halten, wird in der DE 3728235 A1 vorgeschlagen, auch das Kabelanschlussfeld zu kapseln und die Kapselung zur Störlichtbogenbegrenzung mit einem druckabhängig beweglichen Bereich zu versehen, der mit einem einen Erdungsschalter betätigenden Auslöser verbunden ist. Als druckabhängig beweglicher Bereich wird insbesondere eine Schwenkklappe in einer Außenwand des Kabelanschlussfelds vorgeschlagen, die über ein Kabelgestänge mit einem Auslöser des Erdungsschalters verbunden ist.

Die DE 4111586 A1 offenbart ebenfalls eine Schaltanlage mit einem Kabelanschlussbereich, der mit einer zur Gehäuseaußenseite öffnenden Druckklappe ausgestattet ist, um eine Druckentladung im Störfall zu erlauben.

Somit hat ein Störlichtbogen im Schaltfeld oder Schaltkessel keine Auswirkungen nach außen, auch die Auswirkungen eines etwaigen Störlichtbogens im Anschlussbereich (dem oder den Kabelanschlussfeldern) nach außen in Bezug auf Druck und thermische Gase sind wegen der Störlichtbogenbegrenzung gering.

Um den im Störlichtbogenfall im Kabelanschlussfeld entstehenden Druck gezielt abzubauen, ist es des Weiteren bekannt, das Kabelanschlussfeld der Mittelspannungsschaltanlage beispielsweise mit einer Abschlussblende zu verschließen, die sich in einem Störfall aufgrund der sich ausbildenden Druckwelle verformt und geführt öffnet, so dass der Druck gezielt entweichen kann. Dafür ist die Abschlussblende mit Gelenken oder flexiblen Elementen, beispielsweise Bändern, an einer Öffnung in der Seitenwand des Kabelanschlussfeldes befestigt, und es sind an den Verbindungsstellen Federelemente, die der Öffnungsrichtung entgegenwirken, angeordnet. Bei einem derart geführten Druckabbau sind Personen im Umfeld der Mittelspannungsanlage vor der Wirkung einer explosionsartigen Druckwelle sicher geschützt.

Dennoch besteht ein Bedarf, den im Störfall auf das Umfeld einer Mittelspannungsschaltanlage wirkenden Druck weiter zu minimieren, um die von einer abgeschwächten Druckwelle auf die Wände des Raums wirkenden Kräfte und damit die Gebäudebeanspruchung zu reduzieren.

Eine Aufgabe der Erfindung besteht darin, diesem Bedarf gerecht zu werden. Diese Aufgabe wird mit einer Mittelspannungsschaltanlage der eingangs genannten Art gemäß Anspruch 1 gelöst durch mindestens eine druckfeste Kapselung für mindestens einen der Kabelanschlussräume, wobei innerhalb der druckfesten Kapselung Mittel eines Störlichtbogenbegrenzers zum Auslösen eines Erdungsschalters vorgesehen sind.

Unter "Schalter" werden hier insbesondere ein oder mehrere Lasttrennschalter oder Leistungsschalter verstanden.

Mit "Störlichtbogenbegrenzer" sind hier und im Folgenden Mittel gemeint, die bei Auftreten eines Störlichtbogens bzw. bei einem durch einen sich ausbildenden Störlichtbogen verursachten Druckanstieg alle Leiter in dem Raum, in dem der Druckanstieg erfolgt, erden, in dem sie die zum Erden der Leiter vorgesehenen Erdungsschalter, die sich in diesem Raum, aber auch in einem anderen Raum befinden können, auslösen. Die Erdungsschalter sind hierfür vorzugsweise mit einem Kraftspeicher ausgestattet, der durch einen Auslöser ausgelöst werden kann, beispielsweise, indem ein Stift zum Sperren einer Klinke aus seiner sperrenden Position entfernt wird. Es ist in diesem Zusammenhang möglich, auch mehrere Auslöser für einen Kraftspeicher eines Erdungsschalters vorzusehen, deren Betätigung den Kraftspeicher unabhängig vom Betätigen anderer Auslöser auslöst.

Unter "druckfeste Kapselung" wird hier eine Ausführung von einen oder mehrere gekapselte Räume umgebenden Gehäusewänden verstanden, bei der der oder die gekapselten Räume selbst im Störlichtbogenfall vollständig hermetisch verschlossen bleiben und keine Druckentlastung, beispielsweise durch eine sich bei Aufbau des Drucks öffnende Druckentlastungsklappe, vorgesehen ist, die ein Austreten der Druckwelle in die Umgebung der Schaltanlage ermöglicht. Die druckfeste Kapselung im Sinne der beanspruchten Erfindung kann ein oder mehrere Kabelanschlussfelder für den Zu- und/oder Abgang von Kabeln von und zur Mittelschaltanlage umfassen. Sie kann auch zusätzliche Raumabschnitte umfassen. Im Sinne der Erfindung können einzelne oder alle Kabelanschlussfelder für sich, oder mehrere Kabelanschlussfelder, gegebenenfalls zusammen mit einem oder mehreren zusätzlichen Raumabschnitten, druckfest gekapselt sein.

Ein Kern der Erfindung liegt darin, die Mittelspannungsanlage so auszuführen, dass das Gehäuse des Kabelanschlussraums einer im Störlichtbogenfall entstehenden Druckwelle standhält, so dass die durch den Störlichtbogen entstandenen Gase zunächst nicht aus der Anlage entweichen können, wobei der Druck innerhalb des Kabelanschlussraums dadurch begrenzt wird, dass die Leiter der Mittelspannungsschaltanlage noch während des Aufbaus des Störlichtbogens geerdet und damit der Aufbau einer Druckwelle frühzeitig unterbrochen wird.

Als Mittel eines Störlichtbogenbegrenzers zum Auslösen eines Erdungsschalters kommen unter anderem Drucksensoren in Betracht, die einen Druckanstieg feststellen können und bei Überschreiten eines bestimmten Drucks oder einer bestimmten Steigung eines Druckanstiegs ein Signal an einen Betätiger zum Auslösen des Erdungsschalters abgeben.

In einer bevorzugten Ausführungsform der Erfindung ist im Kabelanschlussraum eine Zwischenwand mit einer sich unter Einwirkung einer Druckwelle öffnenden Sensorklappe vorgesehen, die mit mindestens einem Auslöser eines Erdungsschalters zur Störlichtbogenbegrenzung gekoppelt ist. Bei dieser bevorzugten Ausführungsform wird der Erdungsschalter mechanisch ausgelöst, wobei die Bewegung der Sensorklappe beispielsweise über einen Seilzug oder ein Zug- oder Druckgestänge auf den Auslöser übertragen wird. Diese Art der Auslösung von Erdungsschaltern hat sich über viele Jahre bewährt. Der Auslöser kann aber auch elektrisch ausgelöst werden, wenn beispielsweise durch die sich bewegende Sensorklappe ein elektrischer Schalter betätigt wird, der dann beispielsweise einen elektrischen Hubmagneten einschaltet, durch den der Auslöser des Erdungsschalters betätigt wird.

Bei dieser Ausführungsform kann jedes einzelne Kabelanschlussfeld der erfindungsgemäßen Mittelspannungsschaltanlage druckfest gekapselt sein. Die Wandungen jedes Kabelschaltfeldes sind dann als druckfeste Kapselung ausgeführt.

Die Zwischenwand kann den Kabelanschlussraum vollständig in zwei Räume unterteilen, muss es aber nicht. Vorzugsweise ist die Zwischenwand mit einer Druckentlastungsöffnung versehen. Zwar gibt die Sensorklappe aufgrund einer bei der Entstehung des Störlichtbogens auftretenden Druckwelle eine Öffnung in den aus Sicht der Druckwelle hinter der Zwischenwand liegenden Raum frei, so dass ein vergleichsweise schneller Druckausgleich zwischen den durch die Zwischenwand getrennten Räumen erfolgen kann. Der Druckausgleich kann allerdings durch die (permanente) Druckentlastungsöffnung noch beschleunigt werden. Die Druckentlastungsöffnung steht der Funktionsfähigkeit der Sensorklappe nicht entgegen, da die Druckwelle die Klappe in jedem Fall aufstößt, bevor ein Druckausgleich zwischen den Räumen erfolgt ist.

In einer weiteren bevorzugten Ausführungsform der Erfindung ist die druckfeste Kapselung für zwei oder mehr benachbarte Kabelanschlussräume vorgesehen. Somit müssen die zwischen benachbarten Räumen vorgesehenen Trennwände nicht gekapselt ausgeführt werden, so dass die Fertigungskosten reduziert werden können.

Bei dieser Ausführungsform kann es außerdem sinnvoll sein, wenn zwei oder mehrere Sensorklappen in einer oder mehreren Trennwänden zwischen benachbarten Kabelanschlussräumen vorgesehen sind. Sind beispielsweise nur zwei benachbarte Kabelanschlussräume für den Kabelzu- und den Kabelabgang vorgesehen, kann sich eine Sensorklappe von dem ersten Kabelanschlussraum in den zweiten Kabelanschlussraum und die zweite Sensorklappe von dem zweiten Kabelanschlussraum in den ersten Kabelanschlussraum öffnen. Auf diese Weise können die vorhandenen Kabelanschlussräume für den Kabeleingang und den Kabelabgang gegenseitig genutzt werden. Auch kann beispielsweise der Kabelabgang im Transformatorfeld als weiterer benachbarter Raum in die Kapselung einbezogen werden. Liegen drei gemeinsam zu kapselnde Räume nebeneinander, kann in den Trennwänden zwischen den Räumen jeweils eine Sensorklappe vorgesehen sein, die sich von dem jeweils äußeren Raum in den mittleren Raum öffnet, und es ist mindestens eine weitere Sensorklappe vorgesehen, die sich von dem mittleren Raum zu mindestens einem der beiden äußeren Räume öffnet. Diese Ausführungsform hat den besonderen Vorteil, dass sich die in einem Kabelanschlussraum aufgrund des Störlichtbogens entstandenen Gase auf mehrere Räume verteilen können, so dass die Druckbelastung innerhalb der Kapselung geringer ist.

Wie bei den Zwischenwänden innerhalb von Kabelanschlussräumen kann es bei den Trennwänden von gemeinsam gekapselten, benachbarten Kabelanschlussräumen sinnvoll sein, Druckausgleichsöffnungen zum Druckausgleich zwischen den Räumen vorzusehen.

In einer alternativ bevorzugten Ausführungsform der erfindungsgemäßen Mittelspannungsschaltanlage ist innerhalb der druckfesten Kapselung ein weiterer Raum vorgesehen, wobei alle Kabelanschlussräume innerhalb der druckfesten Kapselung jeweils mindestens eine Sensorklappe aufweisen, die in den weiteren Raum hinein öffnet. Ein solcher weiterer Raum kann innerhalb der druckfesten Kapselung beispielsweise hinter oder unter nebeneinander angeordneten Kabelanschlussräumen vorgesehen sein. Auch bei dieser Ausführungsform besteht der Vorteil, dass sich die durch den Störlichtbogen entstandenen Gase auf einen weiteren Raum verteilen können und somit die Druckbelastung im Kabelschaltfeld, in dem der Störlichtbogen entstanden ist, geringer ist.

Im Ergebnis entweichen die im Störfall im Kabelanschlussraum entstehenden Gase nicht unmittelbar aus der Anlage. Vielmehr verbleiben die Gase im Kabelanschlussraum und können dann, insbesondere zu einem Zeitpunkt, nachdem der Lichtbogen erloschen ist, kontrolliert aus der Anlage entweichen. Hierfür kann in einer Ausgestaltung der Erfindung mindestens ein manuell oder automatisch betätigtes Ventil zum Ablassen von Überdruck aus dem weiteren gekapselten Raum und/oder dem oder den Kabelanschlussräum(en) vorgesehen sein.

Um darüber hinaus sicher zu vermeiden, dass sich die Wandungen des oder der Kabelanschlussräume im Störlichtbogenfall ausdehnen und sich dadurch eine, wenn auch geringere Druckwelle im die Schaltanlage umgebenden Raum ausbreitet, können die Wände für die druckfeste Kapselung des mindestens einen Kabelanschlussraums verstärkt, insbesondere ausgesteift und vorzugsweise mit Aussteifungsrippen versehen sein.

Ein Ventil zum Abbauen des Überdrucks nach einem Störfall ist aber nicht unbedingt notwendig. So kann alternativ oder in Ergänzung zum Ventil ein Zugang für einen Kabelanschlussraum mit einer druckfesten Wandung ausgebildet sein, die lösbar an einem hierfür vorgesehenen Rahmen des Kabelanschlussraums befestigt ist, wobei zwischen Wandung und Rahmen eine Dichtung angeordnet ist, die bei befestigter Wandung druckfest ist. Wird die Befestigung der Wandung am Rahmen stückweise gelöst, verliert die Dichtung ihre Wirkung, so dass sich der Druck kontrolliert abbauen kann, ohne dass hierdurch eine Druckwelle auf das Gebäude wirkt.

Um den gerätetechnischen Aufwand so gering wie möglich zu halten, ist es sinnvoll, wenn ein im Schaltfeld vorgesehener Erdungsschalter von allen Drucksensoren der Kabelanschlussräume druckabhängig ausgelöst werden kann. Dabei ist es im Weiteren sinnvoll, wenn für einen Erdungsschalter verschiedene, den Erdungsschalter unabhängig voneinander auslösende Auslöser vorgesehen sind, so dass sich die Auslöser in ihrer Wirkung nicht gegenseitig behindern oder verzögern.

Im Folgenden wird die Erfindung anhand von Figuren, in denen ein bevorzugtes Ausführungsbeispiel der Erfindung im Prinzip dargestellt ist, näher erläutert.

Es zeigen
- Fig. 1: eine Vorderansicht einer erfindungsgemäßen Mittelspannungsschaltanlage,
- Fig. 2: einen Querschnitt der in Figur 1 dargestellten Mittelspannungsschaltanlage entlang der Schnittebene B-B,
- Fig. 3: eine Aufsicht der in Figur 1 dargestellten Mittelspannungsschaltanlage,
- Fig. 4: einen detaillierteren Querschnitt des in Fig. 2 dargestellten Kabelschaltfeldes, und
- Fig. 5: einen weiteren Querschnitt des in Fig. 4 dargestellten Kabelschaltfelds mit einer Aufsicht auf eine Zwischenwand.

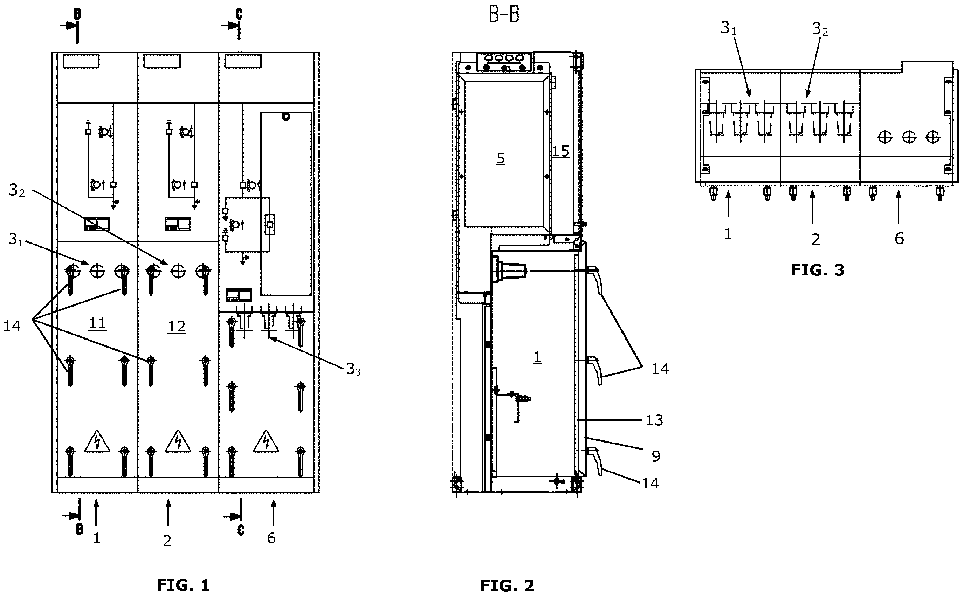

Die in den Figuren 1 bis 3 dargestellte Mittelspannungsschaltanlage weist zwei Kabelanschlussfelder 1, 2 für einen Kabelzugang und einen Kabelabgang sowie ein Transformatorfeld 6, jeweils mit Anschlüssen 3₁, 3₂, 3₃ für jeweils drei Phasenleiter 4 auf, sowie ein sich im Wesentlichen über die gesamte Breite der Anlage erstreckendes Schaltfeld 5. Das Schaltfeld 5 ist druckfest gekapselt, das heißt, dass es selbst unter höherem Innendruck nach einem Störfall verschlossen bleibt und die im Störlichtbogenfall entstehenden Gase nicht aus dem Schaltfeld austreten.

Die Kabelanschlussräume 1, 2 sind ebenso druckfest gekapselt, so dass auch sie unter höherem Innendruck verschlossen bleiben und ein Austreten von im Störlichtbogenfall entstehenden Gasen aus der Anlage verhindert wird. Hierfür sind die äußeren Wände jedes Kabelanschlussfeldes 1, 2 mit Ausnahme von Zugängen zu den Kabelanschlussräumen 1, 2 miteinander verschweißt.

Die Dicke der Wände für die druckfeste Kapselung kann an die zu erwartende Lichtbogenleistung im Störlichtbogenfall und dementsprechend an den zu erwartenden Druckstoß angepasst sein, damit ein Auswölben der Wände bei einem Druckanstieg innerhalb eines der Kabelanschlussräume vermindert oder gänzlich vermieden wird. Alternativ oder in Ergänzung hierzu können die Wände für die druckfeste Kapselung durch Versteifungsrippen zusätzlich ausgesteift sein.

Als Zugang zum jeweiligen Kabelanschlussraum 1, 2 ist an seiner Vorderseite eine druckfeste Wandung 11, 12 vorgesehen, die jeweils lösbar an einem hierfür vorgesehenen Rahmen 13 des Kabelanschlussraums 1, 2 befestigt ist, wobei zwischen Wandung 11, 12 und Rahmen 13 eine (nicht dargestellte) Dichtung, beispielsweise eine Gummidichtung, angeordnet ist, die bei befestigter Wandung 11, 12 druckfest ist. Die Wandungen 11, 12 sind über mehrere, im dargestellten Ausführungsbeispiel jeweils sechs, Verschlussbolzen 14 am Rahmen befestigt. Werden die Verschlussbolzen 14 nach einem Störfall im Kabelanschlussraum nacheinander vorsichtig gelöst, kann das Gas nach und nach entweichen und sich der Überdruck vergleichsweise langsam abbauen. Da der Abbau des Drucks langsam erfolgt, ist das Gebäude, in dem die Mittelspannungsschaltanlage betrieben wird, hierdurch in keiner Weise mehr beansprucht.

Die Ecken der von der druckfesten Wandung 11, 12 abgedeckten Öffnung sind abgerundet und der Dichtungssitz entsprechend rund ausgeführt, so dass die Dichtung nicht aufgrund einer Faltung oder eines Knicks ihre Dichtung verliert.

Gegenüber dem Schaltfeld 5 sind die Kabelanschlussräume 1, 2 wahlweise dadurch abgedichtet, dass die Wände der Kabelanschlussräume mit denen des Schaltfeldes verschweißt sind, oder über eine zähe Klebmasse, die dem zu erwartenden Druck im Störlichtbogenfall standhält.

In einem Raum 15 der Mittelspannungsschaltanlage vor dem Schaltfeld 5 und oberhalb der Kabelanschlussräume 1, 2 sind (nicht dargestellte) Mittel für die Störlichtbogenbegrenzung vorgesehen, wie nachstehend näher erläutert wird.

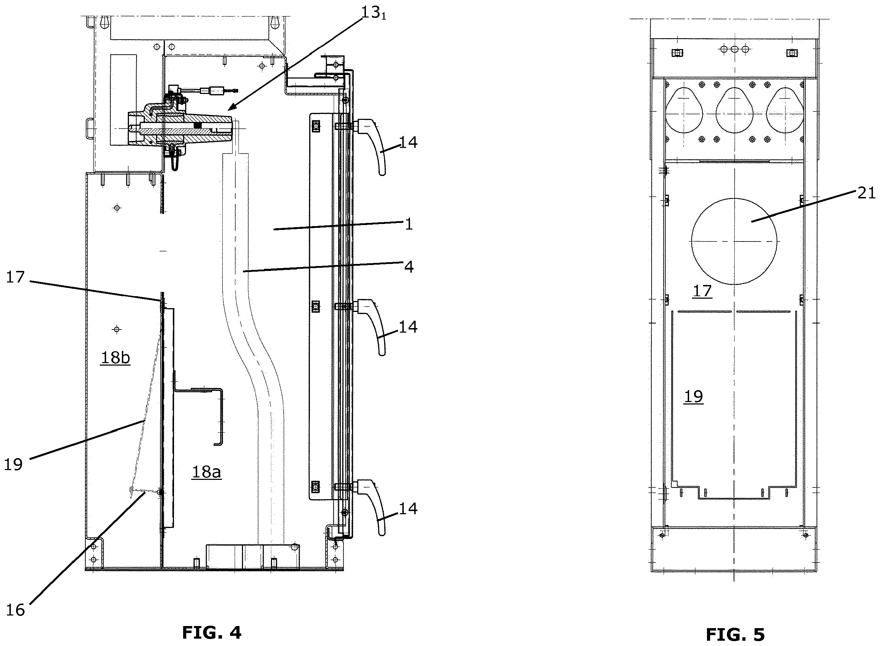

Insbesondere in den Figuren 4 und 5 ist zu sehen, dass in den Kabelanschlussräumen 1, 2 parallel zu ihrer Frontseite verlaufende Zwischenwände 17 vorgesehen sind, die das Kabelanschlussfeld jeweils in einen vorderen Raum 18a und einen hinteren Raum 18b unterteilen. In die Zwischenwände 17 sind Sensorklappen 19 eingesetzt. Jede der Sensorklappen 19 ist mechanisch mit den (nicht dargestellten) Auslösern von (nicht dargestellten) Erdungsschaltern derart gekoppelt, dass die Erdungsschalter im Falle eines Störlichtbogens in einem der Kabelanschlussräume 1, 2 durch das Öffnen der Sensorklappe 19 ausgelöst und die Leiter 4 geerdet werden, so dass der Aufbau des Störlichtbogens unterbrochen wird.

Um einen schnellen Druckausgleich zwischen den beiden Räumen 18a und 18b innerhalb eines Kabelanschlussfeldes 1, 2 zu ermöglichen, ist in jeder Zwischenwand eine zusätzliche Druckentlastungsöffnung 21 vorgesehen.

Üblicherweise sind die Erdungsschalter in solchen gasisolierten Mittelspannungsschaltanlagen im Schaltfeld 5 angeordnet. Damit die Erdungsschalter durch eine Bewegung einer der Sensorklappen 19 ausgelöst werden können, ist im Raum 15 ein totpunktverriegelter Sprungantrieb vorgesehen, der die Erdungsschalter über eine durch die Kapselung des Schaltfeldes 5 hindurch geführte Welle einschaltet, sobald die Verriegelung entriegelt ist. Die Totpunktverriegelung kann durch die Sensorklappen 19 entriegelt werden. Hierfür sind Zugseile vorgesehen, deren jeweils eines Ende mit der Totpunktverriegelung und deren anderes Ende am freien Ende jeweils einer Sensorklappe 19 befestigt ist. Das jeweilige Zugseil ist entlang der Zwischenwand und der Decke eines Kabelanschlussraums 1, und durch einen abgedichteten Durchgang vom Kabelanschlussraum 1, 2 in den Raum 15 geführt. Zur Abdichtung ist der Durchgang von Kabelanschlussraum 1, 2 zu Raum 15 mit einer zähen Dichtmasse verschlossen, wobei die Dichtmasse geeignet ist, die hermetische Kapselung des üblicherweise mit Überdruck betriebenen gasisolierten Schaltfeldes zu gewährleisten.

## Patentansprüche

1. Mittelspannungsschaltanlage mit mindestens einem Kabelanschlussraum (1, 2) und mindestens einem gasisolierten, gekapselten, Schalter und Sammelschienen aufweisenden Schaltfeld (5), wobei sowohl das Schaltfeld (5) als auch der Kabelanschlussraum (1, 2) mit einem Störlichtbogenbegrenzer zum schnellen Auslösen eines Erdungsschalters bei Auftreten eines Störlichtbogens ausgerüstet sind, **gekennzeichnet durch** mindestens eine druckfeste Kapselung aus einen oder mehrere Kabelanschlussräume (1, 2) umgebenden Gehäusewänden, bei der die gekapselten Kabelanschlussräume (1, 2) selbst im Störlichtbogenfall hermetisch verschlossen bleiben, wobei innerhalb der druckfesten Kapselung Mittel eines Störlichtbogenbegrenzers zum Auslösen eines Erdungsschalters vorgesehen sind.

2. Mittelspannungsschaltanlage nach Anspruch 1, **dadurch gekennzeichnet, dass** im Kabelanschlussraum (1, 2) eine Zwischenwand (17) mit einer sich unter Einwirkung einer Druckwelle öffnenden Sensorklappe (19) vorgesehen, die mit mindestens einem Auslöser eines Erdungsschalter zur Störlichtbogenbegrenzung gekoppelt ist.

3. Mittelspannungsschaltanlage nach Anspruch 2, **gekennzeichnet durch** mindestens eine zusätzliche Druckausgleichsöffnung (21) in der Zwischenwand (17).

4. Mittelspannungsschaltanlage nach Anspruch 1, **dadurch gekennzeichnet, dass** eine druckfeste Kapselung für zwei oder mehr benachbarte Kabelanschlussräume (1, 2) vorgesehen ist.

5. Mittelspannungsschaltanlage nach Anspruch 4, **dadurch gekennzeichnet, dass** eine oder mehrere Sensorklappen (19) in einer oder mehreren Trennwänden zwischen benachbarten Kabelanschlussräumen (1, 2) vorgesehen sind.

6. Mittelspannungsschaltanlage nach Anspruch 5, **gekennzeichnet durch** mindestens eine Druckausgleichsöffnung in der oder den Trennwänden.

7. Mittelspannungsschaltanlage nach einem der Ansprüche 2 bis 6, **dadurch gekennzeichnet, dass** innerhalb der druckfesten Kapselung ein weiterer Raum (18b) vorgesehen ist, und dass alle Kabelanschlussräume (1, 2) innerhalb der druckfesten Kapselung jeweils mindestens eine Sensorklappe (19) aufweisen, die in den weiteren Raum (18b) hinein öffnet.

8. Mittelspannungsschaltanlage nach einem der Ansprüche 1 bis 7, **dadurch gekennzeichnet, dass** die Wände für die druckfeste Kapselung des mindestens einen Kabelanschlussraums (1, 2) ausgesteift und insbesondere mit Aussteifungsrippen versehen sind.

9. Mittelspannungsschaltanlage nach einem der Ansprüche 1 bis 8, **dadurch gekennzeichnet** durch mindestens ein manuell oder automatisch betätigtes Ventil zum Ablassen von Überdruck aus dem weiteren gekapselten Raum (18b) und/oder dem oder den Kabelanschlussräumen (1,2).

10. Mittelspannungsschaltanlage nach einem der Ansprüche 1 bis 9, **dadurch gekennzeichnet, dass** der Zugang für einen Kabelanschlussraum (1, 2) mit einer druckfesten Wandung (11, 12) gebildet wird, die lösbar an einem hierfür vorgesehenen Rahmen (13) des Kabelanschlussraums (1, 2) befestigt ist, wobei zwischen Wandung (11, 12) und Rahmen (13) eine Dichtung angeordnet ist, die bei befestigter Wandung (11, 12) druckfest ist.

11. Mittelspannungsschaltanlage nach einem der Ansprüche 1 bis 10, **dadurch gekennzeichnet, dass** ein mit dem Schaltfeld verbundener Erdungsschalter von den in den druckfest gekapselten Kabelanschlussräumen (1, 2) vorgesehenen Mitteln des bzw. der Störlichtbogenbegrenzer ausgelöst werden kann.

## Claims

1. Medium voltage switchgear with at least one cable connection space (1, 2) and at least one gas-insulated, encapsulated switch panel (5) having switches and busbars, both the switch panel (5) and the cable connection space (1, 2) being equipped with an arc-fault limiter for rapid tripping of an earthing switch in the event of an arc fault, **characterized by** at least one pressure-resistant encapsulation consisting of housing walls surrounding one or more cable connection spaces (1, 2), in which the encapsulated cable connection spaces (1, 2) remain hermetically sealed even in the event of an arc fault, means of an arc limiter for triggering an earthing switch being provided within the pressure-resistant encapsulation.

2. Medium voltage switchgear according to claim 1, **characterized in that** an intermediate wall (17) with a sensor flap (19) which opens under the action of a pressure wave is provided in the cable connection space (1, 2) and is coupled to at least one trip device of an earthing switch for limiting an arc fault.

3. Medium voltage switchgear according to claim 2, **characterized by** at least one additional pressure compensation opening (21) in the intermediate wall (17).

4. Medium voltage switchgear according to claim 1, **characterized in that** a pressure-resistant encapsulation is provided for two or more adjacent cable connection spaces (1, 2).

5. Medium voltage switchgear according to claim 4, **characterized in that** one or more sensor flaps (19) are provided in one or more partition walls between adjacent cable connection spaces (1, 2).

6. Medium voltage switchgear according to claim 5, **characterized by** at least one pressure compensation opening in the partition wall or walls.

7. Medium voltage switchgear according to one of claims 2 to 6, **characterized in that** a further chamber (18b) is provided inside the pressure-resistant encapsulation, and **in that** all cable connection spaces (1, 2) inside the pressure-resistant encapsulation each have at least one sensor flap (19) which opens into the further chamber (18b).

8. Medium voltage switchgear according to one of claims 1 to 7, **characterized in that** the walls for the pressure-resistant encapsulation of the at least one cable connection space (1, 2) are stiffened and in particular provided with stiffening ribs.

9. Medium voltage switchgear according to one of claims 1 to 8, **characterized by** at least one manually or automatically operated valve for releasing excess pressure from the further encapsulated chamber (18b) and/or the cable connection space or spaces (1, 2).

10. Medium voltage switchgear according to one of claims 1 to 9, **characterized in that** the access for a cable connection space (1, 2) is formed by a pressure-resistant wall (11, 12) which is detachably fixed to a frame (13) of the cable connection space (1, 2) provided therefor, a seal being arranged between the wall (11, 12) and the frame (13), which seal is pressure-resistant when the wall (11, 12) is fixed.

11. Medium voltage switchgear according to one of claims 1 to 10, **characterized in that** an earthing switch connected to the switch panel can be tripped by the means of the arc-fault limiter(s) provided in the pressure-resistant encapsulated cable connection spaces (1, 2).

## Revendications

1. Installation de distribution électrique moyenne tension avec au moins un espace de raccordement de câble (1, 2) et au moins un tableau de distribution (5) présentant des commutateurs et barres omnibus à isolation gazeuse, encapsulés, dans laquelle aussi bien le tableau de distribution (5) que l'espace de raccordement de câble (1, 2) sont équipés d'un limiteur d'arc électrique parasite servant à déclencher rapidement un commutateur de mise à la terre à l'apparition d'un arc électrique parasite, **caractérisée par** au moins une encapsulation résistante à la pression composée de parois de boîtier entourant un ou plusieurs espaces de raccordement de câble (1, 2), pour laquelle les espaces de raccordement de câble (1, 2) encapsulés restent fermés hermétiquement même en cas d'arc électrique parasite, dans laquelle des moyens d'un limiteur d'arc électrique parasite servant à déclencher un commutateur de mise à la terre sont prévus à l'intérieur de l'encapsulation résistante à la pression.

2. Installation de distribution électrique moyenne tension selon la revendication 1, **caractérisée en ce qu'**une paroi intermédiaire (17) avec un clapet de détection (19) s'ouvrant sous l'effet d'une onde de pression, qui est accouplé à au moins un déclencheur d'un commutateur de mise à la terre servant à limiter un arc électrique parasite, est prévue dans l'espace de raccordement de câble (1, 2).

3. Installation de distribution électrique moyenne tension selon la revendication 2, **caractérisée par** au moins une ouverture de compensation de pression (21) additionnelle dans la paroi intermédiaire (17).

4. Installation de distribution électrique moyenne tension selon la revendication 1, **caractérisée en ce qu'**une encapsulation résistante à la pression est prévue pour deux espaces de raccordement de câble (1, 2) voisins ou plus.

5. Installation de distribution électrique moyenne tension selon la revendication 4, **caractérisée en ce qu'**un ou plusieurs clapets de détection (19) sont prévus dans une ou plusieurs cloisons entre des espaces de raccordement de câble (1, 2) voisins.

6. Installation de distribution électrique moyenne tension selon la revendication 5, **caractérisée par** au moins une ouverture de compensation de pression dans la ou les cloisons.

7. Installation de distribution électrique moyenne tension selon l'une quelconque des revendications 2 à 6, **caractérisée en ce qu'**un espace supplémentaire (18b) est prévu à l'intérieur de l'encapsulation résistante à la pression, et que tous les espaces de raccordement de câble (1, 2) à l'intérieur de l'encapsulation résistante à la pression présentent respectivement au moins un clapet de détection (19), qui s'ouvre à l'intérieur de l'espace supplémentaire (18b).

8. Installation de distribution électrique moyenne tension selon l'une quelconque des revendications 1 à 7, **caractérisée en ce que** les parois pour l'encapsulation résistante à la pression du au moins un espace de raccordement de câble (1, 2) sont renforcées et en particulier pourvues de nervures de renforcement.

9. Installation de distribution électrique moyenne tension selon l'une quelconque des revendications 1 à 8, **caractérisée par** au moins une soupape actionnée manuellement ou automatiquement destinée à laisser échapper une surpression de l'espace supplémentaire (18b) encapsulé et/ou de l'espace ou des espaces de raccordement de câble (1, 2).

10. Installation de distribution électrique moyenne tension selon l'une quelconque des revendications 1 à 9, **caractérisée en ce que** l'accès à un espace de raccordement de câble (1, 2) est formé avec une paroi (11, 12) résistante à la pression, qui est fixée de manière détachable sur un cadre (13) prévu pour cela de l'espace de raccordement de câble (1, 2), dans laquelle un joint, qui est résistant à la pression lorsque la paroi (11, 12) est fixée, est disposé entre la paroi (11, 12) et le cadre (13).

11. Installation de distribution électrique moyenne tension selon l'une quelconque des revendications 1 à 10, **caractérisée en ce qu'**un commutateur de mise à la terre relié au tableau de distribution peut être déclenché par les moyens du ou des limiteurs d'arc électrique parasite prévus dans les espaces de raccordement de câble (1, 2) encapsulés de manière résistante à la pression.
